# EUROPÄISCHE PATENTANMELDUNG

(11) **EP 1 136 219 A1**
(43) Veröffentlichungstag der Anmeldung: **26.09.2001**
(21) Anmeldenummer: 01106842.6
(22) Anmeldetag: 19.03.2001
(51) Int. Cl.: B29C 45/16

(54) **Weich/Weich-Sandwichformkörper, Verfahren zu ihrer Herstellung und ihre Verwendung**

(30) Priorität: 18.03.2000 DE 10013627
(71) Anmelder: PTS Plastic Technologie Service Marketing- & Vertriebs-GmbH, 91587 Adelshofen/Tauberzell (DE)
(72) Erfinder: Stenglin, Uwe, 91587 Adelshofen/Tauberzell (DE)
(74) Vertreter: Beetz & Partner Patentanwälte

(57) **Zusammenfassung**

Die Erfindung betrifft Verbundformkörper mit einem thermoplastischen Träger 3, auf dem drei weiche thermoplastische Schichten 4, 5, 6 aufeinander vorgesehen sind, wobei die obere weiche Schicht 6 die 'Haut' der Verbundformkörpers bildet und die optischen und haptischen Eigenschaften wesentlich bestimmt.

Durch die Weich/Weich-Sandwichstruktur weisen die erfindungsgemäßen Verbundformkörper besonders günstige 'Soft-touch'-Eigenschaften sowie günstige Verschleißeigenschaften auf, besonders, wenn die obere weiche Schicht 6 härter ist als die darunterliegende mittlere weiche Schicht 5.

## Beschreibung

Die Erfindung betrifft Weich/Weich-Sandwichformkörper, die aus einem steifen thermoplastischen Träger und einer darauf befindlichen, am Träger haftenden weichen Kunststoffschicht bestehen, wobei die weiche Kunststoffschicht eine Sandwichstruktur aus mindestens zwei weichen Kunststoffschichten darstellt, die aneinander haften. Die Erfindung betrifft ferner Verfahren zur Herstellung dieser Weich/Weich-Sandwichformkörper.

Steife thermoplastische Träger erhalten durch eine daran haftende weiche Elastomerschicht eine griffige weiche Oberfläche, deren haptische Eigenschaften kurz mit 'Soft-touch' charakterisiert werden.

Derartige thermoplastische Verbundformkörper mit einer weichen Oberflächenschicht ('Haut') sind auf zahlreichen Gebieten im Einsatz, z.B. für Innenverkleidungen von Kraftfahrzeugen, insbesondere für Armaturenbretter, Griffe, Bedienungshebel, Schalthebelknöpfe, etc. . Ein weiteres typisches Anwendungsgebiet sind Werkzeuggriffe verschiedenster Art. Außerdem sind thermoplastische Verbundformkörper mit Elastomerhaut als Lederersatzmaterialien von großer Bedeutung, beispielsweise in der Polsterindustrie für Sitzmöbelteile wie Armlehnen von Stühlen, u.dgl.

Nach dem Stand der Technik werden thermoplastische Verbundformkörper mit weicher Haut nach relativ komplizierten und energie- und arbeitsaufwendigen Verfahren hergestellt, z.B. durch Hinterschäumen von tiefgezogenen Vorformlingen aus einer weichen Folie mit einem Zweikomponenten-Polyurethanschaum oder durch das sog. Slash-Molding von thermoplastischen Elastomeren wie Weich-PVC oder anderen weichen Polymeren hergestellt. Dabei wird im Fall von Weich-PVC PVC-Pulver in eine sich drehende beheizte Form eingefüllt, aus der nach Abkühlung - unter entsprechendem Energieverlust - eine weiche Haut entnommen wird, die anschließend auf einen Träger aufkaschiert wird.

In EP 0 564 974 ist die Herstellung eines Airbags beschrieben, bei der styrolhaltige und andere Olefine enthaltende thermoplastische Elastomere (TPE) mit einer Shore-A-Härte von 70 oder weniger mit einem thermoplastischen Elastomer auf Polyester-Basis (TPE-E) durch Integral-Spritzguß verbunden werden, wobei die Kautschuke durch partielle Vernetzung bzw, durch dynamische Vernetzung während des Spritzgießens vernetzt werden. Die so hergestellten Schichten müssen elastisch sein, damit sie beim Auslösen des Airbags nicht reißen. Als adhäsive Schicht wird ein chloriertes Polyethylen eingesetzt, was hinsichtlich des Recyclings problematisch ist.

Aus EP 0 274 652 ist ein Verfahren zur Herstellung von Ziernähten im Tiefziehverfahren für Kraftfahrzeugverkleidungen bekannt, bei dem die zu formende Folie auf einem Spannrahmen aufgespannt wird. Diese Verfahrensweise ist ebenfalls arbeitsaufwendig und kostspielig, da die zu prägende Folie vorgefertigt werden muß. Außerdem ist bei diesem Verfahren die weiche Folie nicht mit dem Träger verbunden und haftet nicht daran.

In Kunststoffe 12, 99, Jahrgang 98, Seiten 46 ff, sind aufwendige Verfahren des Dekor- und Folienhinterspritzens beschrieben, die zum Teil sehr aufwendig und, auch bedingt durch Nachbearbeitung, sehr teuer sind.

Der Erfindung liegt die Aufgabe zugrunde, neue thermoplastische Verbundformkörper mit einem steifen thermoplastischen Träger und einer darauf befindlichen, am Träger haftenden weichen Kunststoffschicht anzugeben, die eine hohe Verbundhaftung aufweisen und deren weiche Schicht sehr gute Oberflächeneigenschaften, gute Weichheit ('Soff-touch') und hohe Kratz- und Verschleißfestigkeit aufweist. Die weiche Schicht der Formkörper soll ferner vorteilhaft hohe Steifigkeit und sehr gute Rückstelleigenschaften sowie hohe Dimensionsstabilität besitzen.

Ferner sollen Verfahren zur Herstellung der Verbundformkörper und ihre Verwendung angegeben werden.

Die Aufgabe wird gemäß den unabhängigen Ansprüchen gelöst. Die abhängigen Ansprüche betreffen vorteilhafte Ausführungsformen der Erfindungskonzeption.

Die erfindungsgemäßen Verbundformkörper weisen eine weiche Schicht auf dem Träger auf, die ihrerseits aus drei weichen Schichten besteht. Die erfindungsgemäßen Verbundformkörper besitzen also eine Sandwichstruktur aus drei weichen Schichten auf den Träger , wobei die mittlere der drei weichen Schichten vorzugsweise weicher ist als die beiden anderen weichen Schichten.

Die Verbundformkörper der Erfindung weisen also auf dem Träger eine Weich/Weich/Weich-Sandwichstruktur auf.

Zur Vereinfachung der Terminologie wird dieser Aufbau im folgenden auch als Weich/Weich-Sandwichstruktur bezeichnet.

Die Weich/Weich-Sandwichstruktur gemäß der Erfindung weist gegenüber dem Stand der Technik eine Funktionstrennung auf: Die äußere weiche Schicht, also die Haut, ergibt, vor allem bei geringerer Weichheit gegenüber der mittleren Schicht, hohe Kratz- und Verschleißfestigkeit sowie etwa auch Lichtschutz, während die - vorzugsweise weichere - mittlere Schicht vor allem die Weichheit und Elastizität ergibt. Die untere, im Kontakt mit dem Träger stehende und an ihm haftende Schicht dient primär zur Haftung und Adhäsion am Träger.

Die haptischen Eigenschaften resultieren somit aus der Sandwichstruktur der drei weichen Schichten und besonders aus der oberen weichen Schicht.

Die erfindungsgemäßen Verbundformkörper weisen somit einen steifen thermoplastischen Träger sowie eine darauf befindliche und daran haftende weiche thermoplastische Schicht auf und sind dadurch gekennzeichnet, daß die weiche thermoplastische Schicht aus drei weichen thermoplastischen Schichten besteht, wobei
die untere weiche Schicht am Träger haftet, die mittlere weiche Schicht auf der unteren weichen Schicht vorgesehen ist und die obere weiche Schicht auf der mittleren weichen Schicht angeordnet ist.

Die obere weiche Schicht bildet die 'Haut' der Weich/Weich-Sandwichstruktur.

Nach einer vorteilhaften Ausführungsform bestehen die untere weiche Schicht und die obere weiche Schicht aus dem gleichen thermoplastischen Material.

Die mittlere weiche Schicht ist vorzugsweise weicher als die untere und die obere weiche Schicht.

Der Träger ist zumeist ein flächiges Material bzw. ein Flachmaterial, kann jedoch auch eine beliebige andere geometrische Form besitzen, die einen Kontakt mit der unteren weichen Schicht erlaubt.

Nach einer vorteilhaften Ausführungsform ist die mittlere weiche Schicht geschäumt.

Das thermoplastische Material der weichen Schichten, also der unteren Schicht, der mittleren Schicht und der oberen Schicht, ist vorteilhaft ausgewählt unter
- Styrol-Ethylen-Butylen-Styrol-Blockcopolymeren (SEBS),
- Styrol-Ethylen-Propylen-Styrol-Blockcopolymeren (SEPS),
- Styrol-Butylen-Styrol-Blockcopolymeren (SBS),
- Styrol-Styrol-Butylen-Styrol-Blockcopolymeren (SSBS),
- thermoplastischen Elastomeren auf Polyesterbasis (Polyesterelastomeren) (TPE-E),
- thermoplastischen Elastomeren auf Polyurethanbasis (Polyurethanelastomeren) (TPE-U),
- thermoplastischen Elastomeren auf Polyamidbasis (TPE-A),
- Polymerblends aus Ethylen/Propylen(Dien)-Copolymeren (EPDM) und Polypropylen (PP) (EPDM/PP-Blends), die ggf. partiell vulkanisiert bzw. vernetzt sind, vorteilhaft dynamisch, d.h. während des Extrudierens, vernetzt.
- thermoplastischen Elastomeren auf Polyolefinbasis (TPE-O), und
- Metallocen-Polyolefinen geringer Härte
sowie Blends aus diesen Polymermaterialien.

Das thermoplastische Material des Trägers ist vorteilhaft ausgewählt unter
- Acryl-Butadien-Styrol-Copolymeren (ABS),
- Polyethylen (PE),
- Polypropylen (PP),
- Polystyrol (PS),
- Polyamiden (PA),
- Polyphenylenoxid (PPO) bzw. Polyphenylethern (PPE),
- Polymerblends aus Polycarbonat (PC) und Acryl-Butadien-Styrol-Copolymeren (PC/ABS-Blends),
- Polymerblends aus Polycarbonat (PC) und Polybutylenterephthalat (PBT) (PC/PBT-Blends),
- Polymerblends aus Acryl-Butadien-Styrol-Copolymeren und Polyamid (ABS/PA-Blends)
   und
- thermoplastischen Polyurethanen (TPU)
sowie Blends aus diesen Polymermaterialien.

Das erfindungsgemäße Verfahren zur Herstellung der oben erläuterten Verbundformkörper beruht auf dem Spritzgießen und ist gekennzeichnet durch folgende Stufen:
(I) Vorsehen eines steifen thermoplastischen Formkörpers als Träger in einer Spritzgießform
   und
(II) Einspritzen eines ersten weichen thermoplastischen Materials (A) und eines zweiten weichen thermoplastischen Materials (B) als Schmelzen hintereinander ohne oder ohne wesentliche Vermischung in die Spritzgießform,
   wobei das erste weiche Material (A) die obere weiche Schicht (Haut) sowie die untere weiche Schicht und das zweite weiche Material (B) die mittlere weiche Schicht bilden.

Beim erfindungsgemäßen Verfahren kann in Stufe (I) der Träger als unabhängig hergestellter Vorformling in die Spritzgießform eingesetzt werden. Nach einer alternativen Ausführungsform wird in Stufe (I) der Träger in der Spritzgießform hergestellt.

Das Spritzgießen kann in Stufe (II) in einem Spritzgießvorgang einstufig durchgeführt werden. Diese Vorgehensweisen sind wegen ihrer Effektivität und Einfachheit vorteilhaft. Es ist im Rahmen der Erfindung jedoch auch möglich und in vielen Fällen vorteilhaft, in Stufe (II) in einem ersten Schritt das erste weiche thermoplastische Material (A) und in einem darauffolgenden zweiten Schritt das zweite thermoplastische Material (B) in die Spritzgießform einzuspritzen.

Bei der einstufigen Verfahrensweise können in Stufe (II) vorteilhaft ein einstufiges Standard-Sandwich-Spritzverfahren oder ein einstufiges Monosandwich-Verfahren angewandt werden, die dem Fachmann als solche geläufig sind.

Im Rahmen der Erfindung kann jedoch in Stufe (II) auch ein Mehrkanal-Sandwich-Spritzverfahren angewandt werden, bei dem die beiden Schmelzen der weichen thermoplastischen Materialien (A und B) aus zwei getrennten Heißkanalsystemen über Durchspritzöffnungen, die im Träger vorgesehen sind, in die Spritzgießform eingespritzt werden.

Nach einer weiteren bevorzugten Ausführungsform des erfindungsgemäßen Verfahrens wird in Stufe (II) die mittlere weiche Schicht mit einem Treibmittel aufgeschäumt.

Die erfindungsgemäßen Verbundformkörper sind vorteilhaft durch die oben erläuterten Verfahrensweisen erhältlich.

Die erfindungsgemäßen Verbundformkörper können nach üblichen Grundverfahren hergestellt werden, insbesondere durch Verbundspritzgießen, Kompaktspritzgießen, also Spritzgießen ohne Aufschäumen, durch die sog. Gasinnendrucktechnik (GID-Technik), bei der in den Kernbereich der thermoplastischen Schmelze Gas eingepreßt wird, durch Spritzgußgegentakt-Verfahren, bei dem die zweite Schmelze in das Werkzeug eingespritzt wird, bevor die erste Komponente erstarrt ist, sowie etwa durch Coextrusion.

Einstufige Verfahren sind wegen der einfachen Spritzgießvorrichtung und der einfachen Verfahrensweise sehr günstig. Hierzu gehören das Standard-Sandwichverfahren, bei dem die weichen thermoplastischen Komponenten ohne oder im wesentlichen ohne Vermischung in das Werkzeug eingespritzt werden, und das sog. Monosandwich-Verfahren, bei dem der Träger als Vorformling mit der Weich/Weich-Sandwichstruktur überspritzt wird.

Im Rahmen der vorliegenden Beschreibung der Erfindung wird unter der Definition ' ohne oder ohne wesentliche Vermischung ' verstanden, daß die weichen thermoplastischen Komponenten für die Weich/Weich-Sandwichstruktur quasi pfropfenartig oder in parallelen Strömen in das Formwerkzeug eintreten.

Beim Monosandwich-Verfahren wird das thermoplastische Material für die untere und die obere weiche Schicht aus einem einfachen Extruder in den Hauptzylinder eines Extruders, z.B. eines Schubschneckenextruders, vor das darin befindliche thermoplastische Material für die mittlere weiche Schicht eingespritzt, wobei die Schnecke des Hauptzylinders zurückgefahren wird. Die im Hauptzylinder anordnungsmäßig und rheologisch hintereinander befindlichen Materialien werden dann in einem einzigen Spritzgießvorgang, einem einzigen 'Schuß', in die Form eingespritzt, wobei sich die erfindungsgemäße Sandwichstruktur auf dem Träger ausbildet.

Besonders bei großen und großflächigen Trägern ist es günstig, das sog. Mehrkanal-Sandwichverfahren anzuwenden. Bei dieser Verfahrensweise können übliche Standard-Heißkanalsysteme nicht verwendet werden, da sich die Schmelzen für die weichen Schichten im Heißkanal miteinander vermischen würden. Beim Mehrkanal-Sandwichverfahren werden zwei oder mehr Heißkanäle getrennt bis zum Angußpunkt geführt und erst dort zusammengeführt. Im erfindungsgemäßen Fall weist dann der Träger, der zumeist als Vorformling in die Form eingebracht wird, Durchspritzöffnungen auf, die den Durchtritt der Schmelzen in den Raum oberhalb des Trägers und damit den Aufbau der Weich/Weich-Sandwichstruktur erlauben.

Der Träger kann separat vorgefertigt oder in der gleichen Spritzgießform gewissermaßen in situ hergestellt werden.

Das Einlegeverfahren, bei dem ein separat vorgefertigter Träger-Vorformling in die Form eingelegt wird, eignet sich besonders für die Herstellung kleiner Stückzahlen oder von Trägern großer Abmessungen.

Bei der vor der Sandwicherzeugung vorgenommenen Erzeugung des Trägers wird vorteilhaft das sog. Core-back-moulding-Verfahren angewandt. Bei diesem Verfahren wird ein Werkzeug verwendet, bei dem mehrere Schieber nach dem Spritzen des Vorformlings aus dem Werkzeug herausgezogen werden, um so den Hohlraum für die Komponenten der weichen Schichten zu schaffen. Die Vorrichtung wird auch als 'Mehrschieberwerkzeug' bezeichnet.

Alternativ ist auch eine Herstellung des Trägers in einem Drehwerkzeug möglich.

Bei den erfindungsgemäßen Verbundformkörpem mit Weich/Weich-Sandwichstruktur wird eine ausgezeichnete adhäsive Haftung der unteren weichen Schicht auf dem Träger sowie auch eine hervorragende Haftung der weichen Schichten der Weich/Weich-Sandwichstruktur aneinander erzielt.

Die erfindungsgemäßen Verbundformkörperweisen ferner aufgrund ihres Sandwichaufbaus besondere 'Soft-touch'-Eigenschaften auf, die mit einer einzigen weichen Schicht auf dem Träger nicht erzielt werden können.

Das Prinzip der Erzeugung der erfindungsgemäßen Weich/Weich-Sandwichstruktur beruht darauf, dass sich beim Einspritzen von zwei unvermischten Schmelzen in eine Form aus der ersten Komponente die obere Schicht, also die 'Haut', sowie die am Träger haftende untere Schicht und aus der zweiten Komponente die mittlere Schicht bilden.

Die für den Träger und/oder für die weichen Schichten eingesetzten thermoplastischen Kunststoffe können übliche Zusätze enthalten, um ihre physikalischen und chemischen Eigenschaften sowie ihr Aussehen zu modifizieren und ggf. besondere Oberflächeneffekte zu erzielen. Sie können insbesondere ausgewählt werden unter Färbemitteln, Stabilisatoren, Füllstoffen, Verstärkungsstoffen, UV-Schutzmitteln, Antistatikmitteln und Plastifiziermitteln,

Die Füll- und Verstärkungsstoffe können vorteilhaft unter Glaskugeln, Glasfasern, Mineralfasern, Kohlefasern, Stahlfasern, Talkum, Kreide, Schwerspat, Titandioxid sowie Gemischen dieser Stoffe ausgewählt werden.

Als Treibmittel bzw. Schäumungsmittel können alle üblichen exothermen, endothermen und physikalischen Treibmittel verwendet werden, besonders Treibmittel aus der Gruppe der modifizierten Azodicarbonamide. Diese werden zusammmen mit einer oder mehreren Komponenten für die weichen Schichten eingesetzt, bevorzugt in einem Mengenanteil von 1 bis 7 Masse-% und noch bevorzugter in einem Mengenanteil von 1 bis 3 Masse-%. In der Produktbroschüre 'GE-Spezialprodukte' (O8/91) der Fa. Boehringer Ingelheim ist der Einsatz des handelsüblichen Treibmittels Hydrocerol® zur Herstellung geschäumter Spritzgußteile beschrieben.

Die Erfindung wird im folgenden anhand der Zeichnungen erläutert; es zeigen:
- Fig.1: den Aufbau der erfindungsgemäßen Verbundformkörper in schematischer Darstellung;
- Fig.2: eine schematische Darstellung der Zweikanal-oder Mehrkanal-Spritzgießtechnik zur einstufigen Herstellung erfindungsgemäßer Verbundformkörper;
- Fig.3: eine Form mit einem erfindungsgemäßen Verbundformkörper mit eingelegtem Träger und den weichen Schichten in schematischer Darstellung.

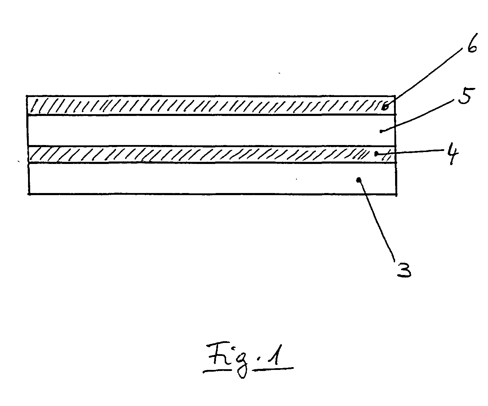

Der erfindungsgemäße Verbundformkörper von Fig. 1 weist einen Träger 3, eine darauf befindliche und daran haftende untere weiche Schicht 4, eine darauf vorgesehene mittlere weiche Schicht 5 sowie eine obere weiche Schicht 6 auf, die auf der mittleren weichen Schicht 5 ausgebildet ist und die 'Haut' des Verbundformkörpers bildet.

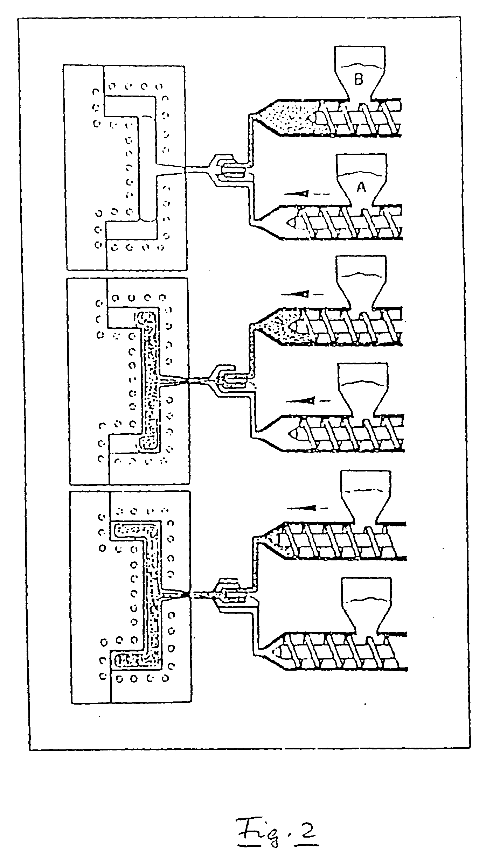

Fig. 2 zeigt die Zweikanal- oder Mehrkanal-Spritzgießtechnik, bei der (oberes Bild) zuerst das weiche Material A für die untere und die obere Schicht in die Form eingespritzt wird. Anschließend wird (mittleres Bild) das Material B für die mittlere Schicht eingespritzt; der Endzustand ist im unteren Bild dargestellt, in dem der Verbundformkörper fertig vorliegt.

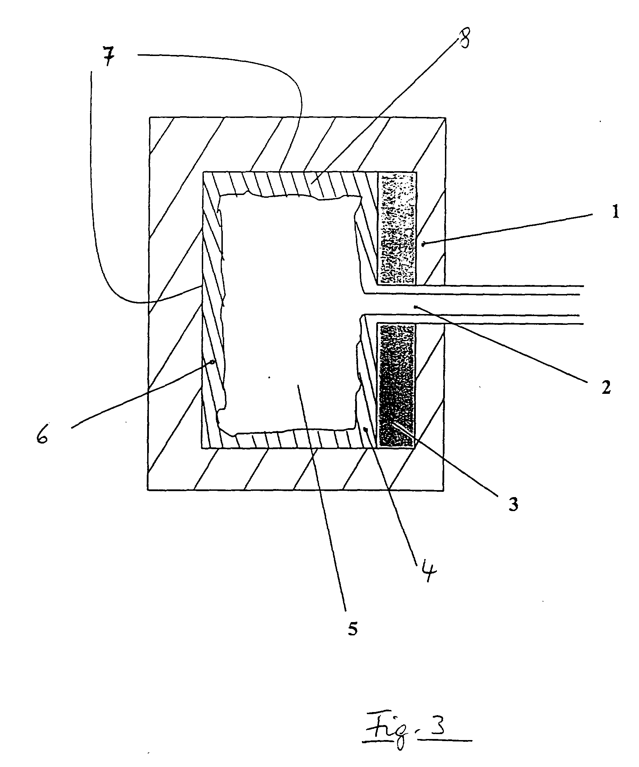

Fig. 3 zeigt eine Form 1 mit einer Spritzöffnung, in der sich ein Vorformling als Träger 3 befindet, der eine Durchspritzöffnung (Hinterspritzkanal) 2 aufweist. Durch das sequentielle Eindringen der weichen Komponenten bilden sich eine untere weiche Schicht 4 und eine obere weiche Schicht 6 aus, zwischen denen die mittlere weiche Schicht 5 liegt. Die Oberfläche 7 der weichen Schicht 6 bildet die 'Hautoberfläche', die das Aussehen und die haptischen Eigenschaften wesentlich bestimmt.

Durch das Spritzverfahren ist die Sandwichstruktur geschlossen, d.h., sie weist im Bereich der Seitenflächen 8 das Material der oberen bzw. unteren weichen Schicht 6 bzw. 4 auf.

Die erfindungsgemäßen Verbundformkörper lassen sich auf außerordentlich vielen Gebieten vorteilhaft einsetzen. Typische Einsatzbeispiele sind etwa die Herstellung von Innenverkleidungen von Kraftfahrzeugen, besonders von Armaturenbrettern, die Herstellung von Knöpfen , Griffen und anderen zu greifenden Gegenständen, insbesondere von Werkzeuggriffen verschiedenster Art, die Herstellung von Stühlen, besonders von Bürostühlen und speziell der Armlehnen, u.dgl.

Die Verbundformkörper eignen sich ferner als Beschichtungen, z.B. für Reaktoren, zu Schalldämmung, zur Auskleidung von Kugel- und Stabmühlen etc.

Die erfindungsgemäßen Verbundformkörper lassen sich preiswert und schnell, besonders nach einstufigen Verfahren, herstellen.

## Patentansprüche

1. Verbundformkörper, die einen steifen thermoplastischen Träger (3) sowie eine darauf befindliche und daran haftende weiche thermoplastische Schicht aufweisen,
**dadurch gekennzeichnet, daß**
die weiche thermoplastische Schicht aus drei weichen thermoplastischen Schichten (4, 5, 6) besteht, wobei
die untere weiche Schicht (4) am Träger (3) haftet, die mittlere weiche Schicht (5) auf der unteren weichen Schicht (4) vorgesehen ist und die obere weiche Schicht (6) auf der mittleren weichen Schicht (5) angeordnet ist.

2. Verbundformkörper nach Anspruch 1, **dadurch gekennzeichnet, daß** die untere weiche Schicht (4) und die obere weiche Schicht (6) aus dem gleichen thermoplastischen Material bestehen.

3. Verbundformkörper nach Anspruch 1 oder 2, **dadurch gekennzeichnet, daß** die mittlere weiche Schicht (5) weicher ist als die untere und die obere weiche Schicht (4, 6).

4. Verbundformkörper nach einem oder mehreren der Ansprüche 1 bis 3, **dadurch gekennzeichnet, daß** der Träger (3) ein flächiges Material bzw. ein Flachmaterial ist.

5. Verbundformkörper nach einem oder mehreren der Ansprüche 1 bis 4, **dadurch gekennzeichnet, daß** die mittlere weiche Schicht (5) geschäumt ist.

6. Verbundformkörper nach einem oder mehreren der Ansprüche 1 bis 5, **dadurch gekennzeichnet, daß** das thermoplastische Material der weichen Schichten (4, 5, 6) ausgewählt ist unter
- Styrol-Ethylen-Butylen-Styrol-Blockcopolymeren (SEBS),
- Styrol-Ethylen-Propylen-Styrol-Blockcopolymeren (SEPS),
- Styrol-Butylen-Styrol-Blockcopolymeren (SBS),
- Styrol-Styrol-Butylen-Styrol-Blockcopolymeren (SSBS),
- thermoplastischen Elastomeren auf Polyesterbasis (Polyesterelastomere) (TPE-E),
- thermoplastischen Elastomeren auf Polyurethanbasis (Polyurethanelastomere) (TPE-U),
- thermoplastischen Elastomeren auf Polyamidbasis (TPE-A),
- Polymerblends aus Ethylen/Propylen(Dien)-Copolymeren (EPDM) und Polypropylen (PP) (EPDM/PP-Blends), die ggf. partiell vulkanisiert sind,
- thermoplastischen Elastomeren auf Polyolefinbasis (TPE-O), und
- Metallocen-Polyolefinen geringer Härte
sowie Blends aus diesen Polymermaterialien.

7. Verbundformkörper nach einem oder mehreren der Ansprüche 1 bis 6, **dadurch gekennzeichnet, daß** das thermoplastische Material des Trägers (3) ausgewählt ist unter
- Acryl-Butadien-Styrol-Copolymeren (ABS),
- Polyethylen,
- Polypropylen (PP),
- Polystyrol (PS),
- Polyamiden (PA),
- Polyphenylenoxid (PPO) bzw. Polyphenylether (PPE),
- Polymerblends aus Polycarbonat (PC) und Acryl-Butadien-Styrol-Copolymeren (PC/ABS-Blends),
- Polymerblends aus Polycarbonat (PC) und Polybutylenterephthalat (PBT) (PC/PBT-Blends),
- Polymerblends aus Acryl-Butadien-Styrol-Copolymeren und Polyamid (ABS/PA-Blends)
und
- thermoplastischen Polyurethanen (TPU)
sowie Blends aus diesen Polymermaterialien.

8. Verfahren zur Herstellung von Verbundformkörpern, die einen steifen thermoplastischen Träger sowie eine darauf befindliche und daran haftende weiche thermoplastische Schicht aufweisen, durch Spritzgießen, insbesondere zur Herstellung der Verbundformkörper nach den Ansprüchen 1 bis 7,
**gekennzeichnet durch** folgende Stufen:
(I) Vorsehen eines steifen thermoplastischen Formkörpers als Träger in einer Spritzgießform
und
(II) Einspritzen eines ersten weichen thermoplastischen Materials (A) und eines zweiten weichen thermoplastischen Materials (B) als Schmelzen hintereinander ohne oder ohne wesentliche Vermischung in die Spritzgießform, wobei das erste weiche Material (A) die obere weiche Schicht (4) (Haut) sowie die untere weiche Schicht (7) und das zweite weiche Material (B) die mittlere weiche Schicht (5) bilden.

9. Verfahren nach Anspruch 8, **dadurch gekennzeichnet, daß** in Stufe (I) der Träger (3) als unabhängig hergestellter Vorformling in die Spritzgießform eingesetzt wird.

10. Verfahren nach Anspruch 8, **dadurch gekennzeichnet, daß** in Stufe (I) der Träger (3) in der Spritzgießform hergestellt wird.

11. Verfahren nach einem oder mehreren der Ansprüche 8 bis 10, **dadurch gekennzeichnet, daß** Stufe (II) in einem Spritzgießvorgang einstufig durchgeführt wird.

12. Verfahren nach einem oder mehreren der Ansprüche 8 bis 10, **dadurch gekennzeichnet, daß** in Stufe (II) in einem ersten Schritt das erste weiche thermoplastische Material (A) und in einem darauffolgenden zweiten Schritt das zweite thermoplastische Material (B) in die Spritzgießform eingespritzt werden.

13. Verfahren nach einem oder mehreren der Ansprüche 8 bis 11, **dadurch gekennzeichnet, daß** in Stufe (II) ein einstufiges Standard-Sandwich-Spritzverfahren oder ein einstufiges Monosandwich-Verfahren angewandt wird.

14. Verfahren nach einem oder mehreren der Ansprüche 8 bis 10 und 12, **dadurch gekennzeichnet, daß** in Stufe (II) ein Mehrkanal-Sandwich-Spritzverfahren angewandt wird, bei dem die beiden Schmelzen der weichen thermoplastischen Materialien (A und B) aus zwei getrennten Heißkanalsystemen über Durchspritzöffnungen, die im Träger (3) vorgesehen sind, in die Spritzgießform eingespritzt werden.

15. Verfahren nach einem oder mehreren der Ansprüche 8 bis 14, **dadurch gekennzeichnet, daß** in Stufe (II) die mittlere weiche Schicht (5) mit einem Treibmittel aufgeschäumt wird.

16. Verbundformkörper nach einem oder mehreren der Ansprüche 1 bis 7, erhältlich nach den Verfahren der Ansprüche 8 bis 15.
